**Europäisches Patentamt**

**European Patent Office**

**Office européen des brevets**

(11) Veröffentlichungsnummer: **0 232 220**
**B1**

# EUROPÄISCHE PATENTSCHRIFT

(45) Veröffentlichungstag der Patentschrift:
**19.04.89**

(21) Anmeldenummer: **87810036.1**

(22) Anmeldetag: **21.01.87**

(51) Int. Cl.⁴: **B 65 B 9/20,** B 65 B 51/26

(54) **Verfahren und Schlauchbeutelmaschine zur Bildung einer Längsschweissnaht oder Siegelnaht an einem Folienschlauch.**

(30) Priorität: **27.01.86 CH 304/86**

(43) Veröffentlichungstag der Anmeldung:
**12.08.87 Patentblatt 87/33**

(45) Bekanntmachung des Hinweises auf die Patenterteilung:
**19.04.89 Patentblatt 89/16**

(84) Benannte Vertragsstaaten:
**AT BE DE ES FR GB GR IT NL SE**

(56) Entgegenhaltungen:
**DE-A-1 486 019**
**DE-B-1 144 174**

(73) Patentinhaber: **ILAPAK Research & Development S.A., Via Grancia Zone Industriale, CH- 6911 Grancia Lugano (CH)**

(72) Erfinder: **Klinkel, Wolfgang, Sala Capriasca, CH- 6951 Bigorio (CH)**
Erfinder: **Vits, Dieter, Buchsbaumstrasse 11, D-4040 Neuss 21 (DE)**

(74) Vertreter: **Bosshard, Ernst, Schulhausstrasse 12, CH- 8002 Zürich (CH)**

EP 0 232 220 B1

LIBER, STOCKHOLM 1989

# Beschreibung

Die Erfindung bezieht sich auf ein Verfahren zur Bildung einer Längsschweiss- oder Siegelnaht am Mantel eines Folienschlauches in einer Schlauchbeutelmaschine, wobei ein Schweiss- oder Siegelkopf mit gleicher Geschwindigkeit wie der Schlauch an seinem Mantel anliegend über eine Vorbestimmte Strecke bewegt wird und dabei die Schweiss- oder Siegelnaht erzeugt, hernach der Schweiss- oder Siegelkopf vom Schlauch abgehoben und in die Ausgangslage zurückbewegt wird, worauf eine über ein kurzes Stück überlappende nächste Schweiss- oder Siegelnaht am Schlauch angebracht wird.

Ferner bezieht sich die Erfindung auf eine Schlauchbeutelmaschine, insbesondere zur Durchführung des Verfahrens nach Patentanspruch 1 mit Mitteln zum Umformen einer flexiblen Folie zu einem zylindrischen Schlauch, welcher um ein Einfüllrohr herum liegt, mit einem Schweiss- oder Siegelkopf zur Bildung einer Längsschweiss- oder Siegelnaht am Mantel des Schlauches, wobei Antriebsmittel für den Schlauch und Antriebsmittel vorhanden sind, mit denen der Schweiss- oder Siegelkopf mit gleicher Geschwindigkeit wie der Schlauch am seinem Mantel anliegend in Schlauch-Längsrichtung bewegbar ist und mit denen der Schweiss- oder Siegelkopf nach erfolgten Schweiss- oder Siegelvorgang vom Schlauch abgehoben und in die Ausgangsstellung zurückbewegbar ist.

Bei Schlauchbeutelmaschinen ist es bekannt, aus einer ebenen, flexiblen Folie durch eine Formschulter einen zylindrischen, vorerst am Mantel offenen Schlauch zu bilden, worauf die sich überlappenden Längsränder durch eine in Schlauch-Längsrichtung verlaufende Schweiss- oder Siegelnaht verbunden werden. An diesem Schlauch wird eine Quernaht angebracht, worauf der so gebildete, oben offene Sack mit von oben zufliessendem Einfüllgut vorbestimmter Menge gefüllt und hernach oben verschlossen wird. Der Vorschub des Schlauches erfolgt bei konventionellen Schlauchbeutelmaschinen schrittweise im Takt des Abfüllvorganges, wobei das Anbringen der Längsschweissnaht bei stillstehendem Schlauch erfolgt. Für einen kontinuierlichen Schlauchvorschub können derartige stationäre Längschweissvorrichtungen nicht verwendet werden.

Aus der DE-B-1 144 174 geht zwar bereits eine Maschine der eingangs genanten Art zur Herstellung gefüllter Beutel hervor, bei der während des schrittweisen Schlauchvorschubes ein mitlaufender Schweißstempel vorhanden ist. Dieser Schweißstempel hat keinen eigenen Antrieb und gelangt am Ende des Hubes entgegen seiner Rückstellkraft in die Ausgangslage zurück. Da ein schrittweiser der Beutellänge entsprechender Schlauchvorschub erfolgt, muss die Länge des Schweißstempels mindestens der Beutellänge entsprechen, wodurch grosse Fallhöhen für die einzufüllendenProdukte entstehen können.

Die mit der Erfindung zu lösende Aufgabe steht in der Schaffung eines Verfahrens und einer Schlauchbeutelmaschine um bei kontinuierlichem Schlauchvorschub am Schlauch-Mantel eine Längsschweiss- oder Siegelnaht anbringen zu können, wobei auch bei relativ hoher Schlauch-Vorschubgeschwindigkeit eine für die Bildung einer einwandfreien Schweiss- oder Siegelnaht erforderliche Kontaktzeit des Schweiss- oder Siegelkopfes an der Folie eingehalten werden kann und die Länge des Schweiss- oder Siegelwerkzeuges unabhängig von der Beutellänge ist.

Diese Aufgabe wird durch das erfindungsgemässe Verfahren dadurch gelöst, dass der Schlauch in Schlauchlängsrichtung durch am Schlauchmantel anliegende Antriebsmittel kontinuierlich bewegt wird und der Schweiss- oder Siegelkopf während des Schweiss- oder Siegelvorganges und während seines Rücklaufes durch einen eigenen Antrieb angetrieben wird.

Die erfindungsgemässe Schlauchbeutelmaschine ist dadurch gekennzeichnet, dass die Antriebsmittel für den Schweiss- oder Siegelkopf aus mindestens einem Gelenkkoppelgetriebe bestehen, das so ausgelegt ist, dass die Bewegung des Schweiss- oder Siegelkopfes in Schlauchvorschubrichtung während der Schweisseperiode mindestens angenähert geradlinig ist und dass die Antriebsmittel für den Schlauch aus am Schlauchmantel anliegenden Antriesbsmitteln zum kontinuierlichen Antrieb des Schlauches bestehen.

Auf diese Weise ist die Erzeugung einer Längsschweissnaht an einem Schlauch bei kontinuierlichem Schlauchvorschub und eine kontinuierliche Abpackung von Einfüllgut in Beutel möglich, wodurch die Abpackleistung von Schlauchbeutelmaschinen erhöht werden kann. Gleichzeitig werden rissgefährliche Spannungsspitzen in der Folie vermieden die sonst bei raschem schrittweisen Schlauchvorschub entstehen. Zudem sind keine Anpassungen erforderlich, wenn die Beutellänge geändert wird.

In der Zeichnung ist ein Ausführungsbeispiel des Erfindungsgegenstandes dargestellt. Es zeigen:

Fig. 1 eine Teilansicht einer Schlauchbeutelmaschine in schematischer Darstellung

Fig. 2 einen Schnitt nach der Linie II - II in Fig. 1

Fig. 3 eine schematische Darstellung eines Gelenkkoppelgetriebes

Fig. 4 ein Detail des Schweisskopfes mit den sich überlappenden Rändern des Schlauches.

Bei einer Schlauchbeutelmaschine wird aus einer von einer Rolle abgezogenen ebenen Folie aus Kunststoffmaterial durch eine Formschulter 3 ein Schlauch gebildet, der durch Längs- und Querschweissnähte zu einem Beutel geformt wird, der nach dessen Füllung vom Schlauchstrang abgetrennt wird. An Stelle einer Schweissung könnte auch eine Siegelung stattfinden, bei der eine auf die Folie aufgetragene Schicht durch Wärmeeinwirkung verbunden wird. Nachfolgend wird der Einfachheit halber jedoch nur von Schweissnaht, Schweisseinrichtung und Schweisskopf gesprochen, wobei das gleiche jeweils auch für die Siegelung gilt.

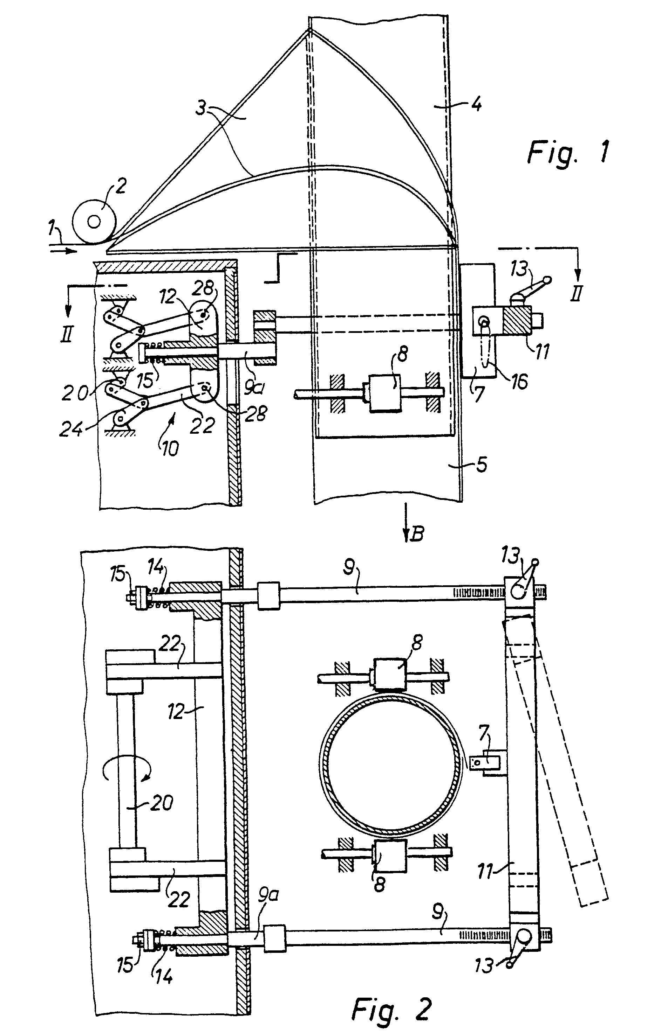

Gemäss Fig. 1 wird eine flexible Folie 1 von einer nicht dargestellten Vorratsrolle abgewickelt und gelangt über nicht dargestellte Antriebsrollen und eine Umlenkrolle 2 zur Formschulter 3, welche die ebene Folie 1 in eine im wesentlichen zylindrische Form um ein Füllrohr 4 herum umlenken. Das Füllrohr 4 ist oben mit einem nicht dargestellten Trichter für das Abfüllgut versehen. Der Schlauch 5 muss an seinen sich überlappenden Enden am Mantel durch eine Längsnaht geschlossen werden, was durch einen Schweisskopf 7 erfolgt.

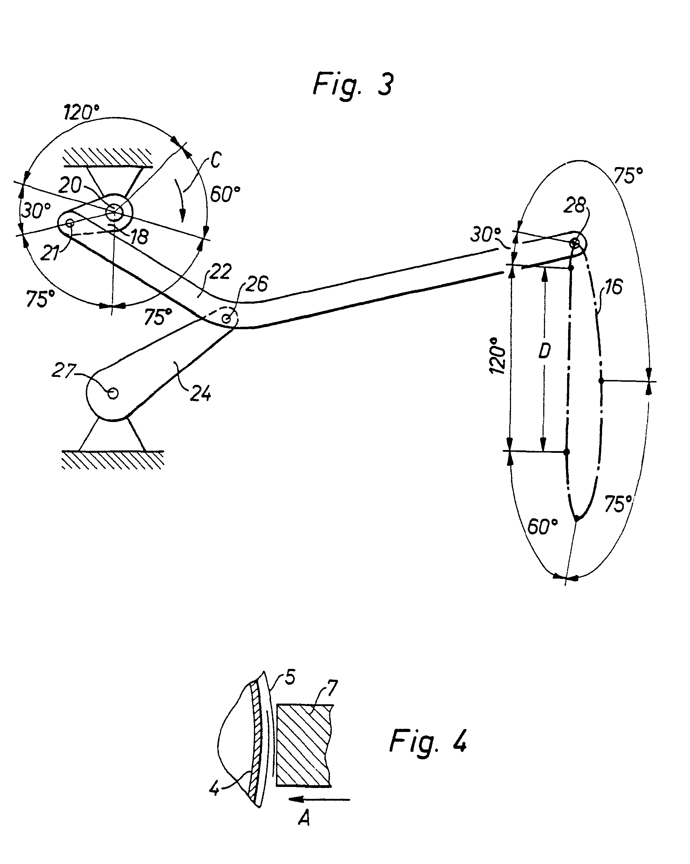

Wie aus den Fig. 2 und 4 ersichtlich ist, liegt der Schweisskopf 7 über den sich überlappenden Enden des Schlauches 5 und kann in Richtung des Pfeiles A gegen das Füllrohr 4 angepresst werden. Da der Schweisskopf 7 elektrisch beheizt ist und eine Temperatur von etwa 80 - 130° C aufweist, erfolgt eine Verschweissung der beiden Lappen, so dass eine Längs-Schweissnaht am Mantel des Schlauches 5 entsteht, die sich somit vertikal in Längsrichtung des Schlauches erstreckt.

Der Transport des Schlauches in Richtung des Pfeiles B erfolgt kontinuierlich mit Hilfe angetriebener Folienabzugsrollen 8, oder Riemen welche gegen den Mantel des Schlauches 5 im bereich des Füllrohres 4 anliegen. Die Erzeugung der Längsschweissnaht erfolgt während des kontinuierlichen Vorschubes des Schlauches 5. Der Schweisskopf 7 wird während des Schlauchvorganges mit gleicher linearer Geschwindigkeit wie der Schlauch 5 in Richtung des Pfeiles B bewegt. Diese Bewegung des Schweisskopfes 7 erfolgt mit Hilfe eines doppelt vorhandenen Gelenkkoppelgetriebes 10, wie dies nachfolgend im Zusammenhang mit Fig. 3 näher erläutert wird. Der Schweisskopf 7 sitzt auf einem Querträger 11, der seinerseits an seinen Enden an zwei Stangen 9 festgemacht ist. Um einen guten Zugang zur Schweißstelle zu erhalten, ist der Querträger 11 ausschwenkbar, wie dies durch unterbrochene Linie in Fig. 2 angedeutet ist. Ferner kann die Lage der Querstange 11 in Horizontalrichtung verändert werden und in der gewünschten Position durch Handhebel 13 fixiert werden. Die vom Querträger 11 abgewandten Enden der Stangen 9a sind in einem Profilträger 12 gelagert, der seinerseits mit den beiden parallel arbeitenden Gelenkkoppelgetrieben 10 verbunden ist. Zwischen dem hinteren Ende der Stangen 9a und dem Profilträger 12 befindet sich je eine Druckfeder 14, mit welcher der Anpressdruck der Schweisseinrichtung erzeugt und allenfalls verändert werden kann, indem die Schraubenmuttern 15 auf dem Stangenende in der eigen oder andern Richtung verdreht werden.

Die beiden Gelenkkoppelgetriebe 10 bewirken, dass der Schweisskopf 7 beim Antrieb der Kurbel 18 - ausgehend von der Stellung nach Fig 3 - eine Abwärtsbewegung in Richtung des Pfeiles B ausführt. In der untersten Lage hebt er sich von der Folie 5 ab und kehrt in die Ausgangslange zurück, wie dies durch die Bewegungs-Kurve 16 in Fig. 3 angedeutet ist.

Das Gelenkkoppelgetriebe gemäss Fig. 3 mit vier Gelenkstellen enthält eine in Richtung des Pfeiles C drehbare Kurbel 18, die zusammen mit einer Welle 20 drehbar ist. Eine leicht gebogene Schwinge 22 ist am Gelenkpunkt 21 der Kurbel gelenkig befestigt und steht mit einer Koppel 24 bei einem Gelenkpunkt 26 in Verbindung. Die Koppel 24 ist mit einem Drehlager 27 an einem stationären Teil abgestützt. Dieser Gelenkpunkt befindet sich etwa im Abstand von einem Drittel der Länge der Schwinge 22 vom Gelenkpunkt 21 der Kurbel 18. Das andere Ende der Schwinge 22 ist durch einen Gelenkpunkt 28 am Profilträger 12 festgemacht. Die Abmessungen und Winkel dieses Gelenkkoppelgetriebes 10 sind so ausgelegt, dass der Gelenkpunkt 28 über einen Bereich D eine praktisch geradlinige Bewegung ausführt. Die Verhältnisse der Längen der Hebelarme verhalten sich wie folgt: Kurbel 18 = 1; Koppel 24 = 3; Schwingenteillänge 22 zwischen 21 und 26 = 4; Gesamtlänge der Schwinge 12 = 12. In der obern Endlage gemäss Fig. 3 bildet eine Verbindungslinie zwischen dem Drehlager 27 und dem Gelenkpunkt 26 einerseits und einer Verbindungslinie zwischen dem Gelenkpunkt 21 und der Welle 20 anderseits einen spitzen Winkel von etwa 15 - 25°, vorzugsweise etwa 20°.

Der kreisförmigen Bewegung der Kurbel 18 und die dabei der Kurve 16 jeweils zugeordneten Winkel sind in Fig. 3 eingetragen. Nach dem Zurücklegen der geradlinigen Strecke D wird der Schweisskopf 7 von der Folie 5 abgehoben und wieder in die Ausgangslage bewegt. Der Antrieb der Welle 20 und der Antrieb der Folienabzugsrollen 8 erfolgt synchron. Die Abwärtsbewegung des Schlauches 5 in Richtung des Pfeiles B, und die Abwärtsbewegung des Schweisskopfes im Bereich D erfolgt mit gleicher linearer Geschwindigkeit. Allfällige Ungenauigkeiten im Anpressdruck des Schweisskopfes 7 am Schlauch 5 werden durch die Federn 14 ausgeglichen.

Die Länge des Schweisskopfes 7 ist grösser als der Strecke D entspricht, sodass beim Anbringen einer nächsten Schweissnaht eine kurze Überlappungsstrecke entsteht, damit eine zusammenhängende dichte Längsschweissnaht gebildet wird. Um eine verkantungsfreie Führung des Profilträgers 12 zu erreichen, ist das Gelenkkoppelgetriebe 10 doppelt ausgeführt, wie dies aus Fig. 1 hervorgeht.

An Stelle einer einfachen Überlappungsnaht gemäss Fig. 4 könnte auch eine sog. Umlegenaht gebildet werden, bei welcher das innere Schlauchende nochmals umgefaltet ist.

Unterhalb des Füllrohres 4 und unterhalb des Schweisskopfes 7 befinden sich Quersiegelbacken, mit welchen im Schlauch eine Quernaht gebildet wird. Nach dem Füllen des so gebildeten Beutels mit Füllgut, wird eine den Beutel schliessende zweite Quernaht angebracht und der Beutel vom Schlauchstrang abgeschnitten.

Die gleiche Schweisseinrichtung lässt sich auch für horizontale Schlauchbeutelmaschinen anwenden, wobei die Einfüllorgane entsprechend anzupassen sind.

## Patentansprüche

1. Verfahren zur Bildung einer Längsschweiss- oder Siegelnaht am Mantel eines Folienschlauches in einer Schlauchbeutelmaschine, wobei ein Schweiss- oder Siegelkopf (7) mit gleicher Geschwindigkeit wie der Schlauch (5) an seinem Mantel anliegend uber eine vorbestimmte Strecke bewegt wird und dabei die Schweiss- oder Siegelnaht erzeugt, hernach der Schweiss- oder Siegelkopf (7) vom Schlauch (5) abgehoben und in die Ausgangslage zurückbewegt wird, worauf eine über ein kurzes Stück überlappende nächste Schweiss- oder Siegelnaht am Schlauch (5) angebracht wird, dadurch gekennzeichnet, dass der Schlauch (5) in Schlauchlängsrichtung durch am Schlauchmantel anliegende Antriebsmittel kontinuierlich bewegt wird und der Schweiss- oder Siegelkopf (5) während des Schweiss- oder Siegelvorganges und während seines Rücklaufes durch einen eigenen Antrieb angetrieben wird.

2. Schlauchbeutelmaschine, insbesondere zur Durchführung des Verfahrens nach Patentanspruch 1, mit Mitteln (3) zum Umformen einer flexiblen Folie (1) zu einem zylindrischen Schlauch (5), welcher um ein Einfüllrohr (4) herum liegt, mit einem Schweiss- oder Siegelkopf (7) zur Bildung einer Längsschweiss- oder Siegelnaht am Mantel des Schlauches (5), wobei Antriebsmittel (8) für den Schlauch und Antriebsmittel (10) vorhanden sind, mit denen der Schweiss- oder Siegelkopf (7) mit gleicher Geschwindigkeit wie der Schlauch an seinem Mantel anliegend in Schlauch-Längsrichtung (B) bewegbar ist und mit denen der Schweiss- oder Siegelkopf (7) nach erfolgtem Schweiss- oder Siegelvorgang vom Schlauch (5) abgehoben und in die Ausgangsstellung zurück bewegbar ist, dadurch gekennzeichnet, dass die Antriebsmittel (10) für den Schweiss- oder Siegelkopf (7) aus mindestens einem Gelenkkoppelgetriebe (10) bestehen, das so ausgelegt ist, dass die Bewegung des Schweiss- oder Siegelkopfes (7) in Schlauchvorschubrichtung (B) während der Schweissperiode mindestens angenähert geradlinig ist und dass die Antriebsmittel (8) für den Schlauch aus am Schlauchmantel anliegenden Antriebsmitteln (8) zum kontinuierlichen Antrieb des Schlauches (5) bestehen.

3. Schlauchbeutelmaschine nach Patentanspruch 2, dadurch gekennzeichnet, dass das Gelenkkoppelgetriebe (10) eine um eine Achse (20) drehbare Kurbel (18) enthält, an die eine Schwinge (22) angelenkt ist, zwischen den Enden der Schwinge (22) eine Koppel (24) angeordnet und mit dieser gelenkig zusammenwirkt, und das von der Kurbel (18) abgewandte Ende der Schwinge (22) über Zwischenglieder (8, 9, 12) mit dem Schweiss- und Siegelkopf (7) zusammenwirkt.

4. Schlauchbeutelmaschine nach Patentanspruch 2 oder 3, dadurch gekennzeichnet, dass zwei miteinander synchron parallel zusammenwirkende Gelenkkoppelgetriebe (10) vorhanden sind, die auf ein gemeinsames Tragorgan (12) einwirken, von dem federbelastete Zugstangen (9, 9a) abragen, die mit einem den Schweiss- oder Siegelkopf (7) tragenden Querträger (11) verbunden sind.

5. Schlauchbeutelmaschine nach Patentanspruch 3 oder 4, dadurch gekennzeichnet, dass der Antrieb der Kurbel (18) synchron mit den Antriebsmitteln der kontinuierlichen Vorschubbewegung des Schlauches (5) erfolgt.

## Claims

1. Method for forming a longitudinal welding or sealing seam on the jacket of a tube of foil in a tubular bag-making machine, whereby a welding or sealing head (7) is moved at the same speed as the tube (5) along a predetermined path in contact with the jacket and thus generates the welding or sealing seam, whereby the welding or sealing head (7) is subsequently raised off the tube (5) and is returned to the initial starting position, whereby the next welding or sealing seam is applied to the tube (5) so that it overlaps the first for a short distance, characterised by the fact that the tube (5) is moved continuously along its axis by a mechanism in contact with the jacket of the tube and the welding or sealing head (5) is driven by its own drive mechanism during the welding or sealing process and its return run.

2. Tubular bag-making machine, in particular for the execution of the process according to Patent Claim 1, with equipment (3) for forming a flexible foil (1) into a cylindrical tube (5) which lies around a filling tube (4), with a welding or sealing head (7) for providing a longitudinal welding or sealing seam on the jacket of the tube (5), whereby a drive facility (8) for the tube (5) and a drive facility (10) are provided with which the welding or sealing head (7) can be moved at the same speed as the tube and in contact with its jacket in the longitudinal direction of the tube (B) and with which the welding or sealing head (7) is lifted off the tube (5) after completing the welding or sealing process and is moved back to the initial position, characterised by the fact that the drive equipment (10) for the welding or sealing head (7) consists of at least one universal linkage coupling gear (10) which is designed so that the movement of the welding or sealing head (7) in the direction of forward movement of the tube (B) is at least approximately in a straight line during the welding period and that the drive equipment (8) for the tube is in contact with the jacket of the tube for driving the tube (5) continuously.

3. Tubular bag machine according to Patent Claim 2, characterised by the fact that the universal linkage coupling gear (10) includes a crank (18) rotating around a shaft (20) whereby a rocker arm (22) is connected and a coupling (24) is provided between the ends of the rocker arm (22) to operate with it and that the end of the rocker arm (22) away from the crank (18) acts through intermediate components (8, 9, 12) with the welding and sealing head (7).

4. Tubular bag machine according to Patent Claim 2 or 3, characterised by the fact that two parallel synchronous universal linkage coupling gears (10) are provided to interact and take effect upon a common support structure (12) from which springloaded pull rods (9, 9a) protrude which are connected with one of the lateral supports (11) carrying the welding or sealing head (7).

5. Tubular bag machine according to Patent Claim 3 or 4, characterised by the fact that the drive of the crank (18) is synchronised with the drive equipment for the continuous forward movement of the tube (5).

**Revendications**

1. Procedé de fabrication de sachets tubulaires pour la formation d'une couture de soudage ou de scellement longitudinale dans une bande en forme de tube, du type dans lequel une tête de soudure ou de scellement (7) est déplacée à la même vitesse que la gaine (5) sur une course prédéterminée, alors qu'elle porte contre l'enveloppe de la gaine et qu'est réalisé la cordon de soudure ou de scellement, après quoi la tête de soudure (7) est écartée de la gaine et est ramenée dans sa position de départ et qu'est réalisé sur la gaine (5) avec un faible chevauchement, le cordon de soudure ou de scellement, caractérisé par le fait que la gaine (5) est déplacée de façon continue dans le sens de sa longueur à l'aide de moyens d'entraînement portant contre l'enveloppe de la gaine et que la tête de soudure ou de scellement (5) est entraînée par des moyens d'entraînement qui lui sont propres, pendant le processus de soudure ou de scellement et pendant sa course de retour.

2. Machine à fabriquer des sachets à partir d'une gaine, en particulier pour la mise en oeuvre du procédé selon la revendication 1, avec des moyens (3) pour transformer une feuille souple (1) en une gaine cylindrique (5) qui se situe autour d'un tube de remplissage (4), avec une tête de soudure ou de scellement (7) pour réaliser sur l'enveloppe de la gaine (5) un cordon longitudinal de soudure ou de scellement, des moyens d'entraînement (8) étant prévus pour la gaine (5), ainsi que des moyens d'entraînement (10) à l'aide desquels la tête de soudure ou de scellement (7) est déplacée dans la direction longitudinale (B) de la gaine, à la même vitesse que celle-ci, tout en portant contre elle, et à l'aide desquels la tête de soudure ou de scellement (7) est écartée de la gaine (5), après réalisation du processus de soudure ou de scellement et est ramenée dans sa position de départ, caractérisée par le fait que les moyens d'entraînement (10) pour la tête de soudure ou de scellement (7) sont constitués par au moins un mécanisme articulé à bielle et à manivelle (10), qui est conçu de telle façon que le mouvement de la tête de soudure ou de scellement (7), dans la direction d'avancement (B) de la gaine (5), est à peu près rectiligne pendant la période de soudage, et que des moyens d'entraînement (8) pour la gaine sont constitués par des moyens d'entraînement (8) qui portent contre l'enveloppe de la gaine en vue de l'entraînement continu de la gaine (5).

3. Machine à fabriquer des sachets à partir d'une gaine, selon la revendication 2, caractérisée par le fait que le mécanisme articulé à bielle et à manivelle (10) comporte une manivelle (18) tournant autour d'un axe (20) et à laquelle est articulée une bielle oscillante (22), qu'entre les extrémités de cette dernière est prévue une biellette (24) coagissant à articulation avec la bielle oscillante, et que l'extrémité de cette dernière, qui est éloignée de la manivelle (18), coagit, à l'aide d'éléments intermédiaires (8, 9, 12), avec la tête de soudure ou de scellement (7).

4. Machine à fabriquer des sachets à partir d'une gaine selon la revendication 2 ou 3, caractérisée par le fait que sont prévus deux mécanismes articulés à bielle et à manivelle (10) qui coagissent en parallèle entre eux de façon synchrone et qui agissent sur un organe de support commun (12) à partir duquel s'étendent deux tirants (9, 9a), chargés par des ressorts et reliés avec une traverse (11) qui porte la tête de soudure ou de scellement (7).

5. Machine à fabriquer des sachets à partir d'une gaine selon la revendication 3 ou 4, caractérisée par le fait que l'entraînement de la manivelle (18) est opéré en synchronisme avec les moyens d'entraînement du mouvement d'avancement continu de la gaine (5).

Fig. 1

Fig. 2

EP 0 232 220 B1

Fig. 3

Fig. 4